# EUROPÄISCHE PATENTSCHRIFT

(11) **EP 0 905 433 B1**
(45) Veröffentlichungstag und Bekanntmachung des Hinweises auf die Patenterteilung: **17.04.2002**
(21) Anmeldenummer: 98250326.0
(22) Anmeldetag: 15.09.1998
(51) Int. Cl.: F16L 55/165, H02G 1/08, G02B 6/44, G02B 6/48

(54) **Verfahren und Vorrichtung zum Einbringen, Positionieren und Befestigen von Bauteilen in Hohlräumen unterschiedlicher Querschnitte**
Method and device for installing, positioning and fixing of parts in cavities of diverging cross sections
Procédé et dispositif pour l'installation, le positionnement et la fixation de pièces dans des cavités avec une section transversale divergente

(30) Priorität: 26.09.1997 DE 19744006; 14.11.1997 DE 19751415
(43) Veröffentlichungstag der Anmeldung: 31.03.1999
(73) Patentinhaber: Berliner Wasserbetriebe Anstalt des öffentlichen Rechts, 10179 Berlin (DE)
(72) Erfinder: Gaebelein, Wilhelm, Dr.-Ing., 14163 Berlin (DE); Beyer, Klaus, Dr.-Ing., 10789 Berlin (DE); Schubert, Hans-Peter, 12109 Berlin (DE)

(56) Entgegenhaltungen:
- EP-A- 0 158 415
- EP-A- 0 158 416
- EP-A- 0 251 907
- DE-A- 1 650 994
- DE-A- 3 501 676
- DE-A- 4 203 718
- DE-A- 19 701 787
- GB-A- 2 129 627
- US-A- 4 647 251

## Beschreibung

Die Erfindung betrifft ein Verfahren zum Einbringen, Positionieren und Befestigen von Bauteilen, insbesondere von Rohren, Kabeln, Stangen oder Drähten in Hohlräumen unterschiedlicher Querschnitte, beispielsweise in Entwässerungskanälen, in denen sich bereits die Bauteile befinden oder mittels eines Roboters eingebracht werden und eine Vorrichtung zur Durchführung des Verfahrens.

Die Ver- und Entsorgungsunternehmen verfügen weltweit in allen Versorgungsgebieten über eine Vielzahl von Entwässerungskanälen unterschiedlicher Dimensionen und unterschiedlicher Werkstoffe. Diese werden zur Ableitung von Schmutz-, Regen- und Mischwasser genutzt.
Die in der Telekommunikation weit verbreiteten Leitemetze werden bisher überwiegend in Schutzrohre im öffentlichen Straßenland gelegt. Dieses erfordert ein Verlegen dieser Schutzrohre in die Erde mit den daraus resultierenden hohen Kosten und zusätzlich der Beeinträchtigung von Umwelt und Verkehr.
Aufgrund der Zunahme der Anwendungen in der Telekommunikation müssen künftig kostengünstigere und wirtschaftlichere Wege gegangen werden. Einer davon ist die Verlegung der für die Telekommunikation erforderlichen Kabel oder der dafür benötigten Schutzrohre in diesen Kanälen (DE 42 03 718).
Der Vorteil liegt zudem darin, dass Anschlüsse ohne aufwendige Aufbrucharbeiten an das Telekommunikationsnetz hergestellt werden können.
Problematisch ist dabei das Einbringen und Befestigen der Kabel, insbesondere bei Kanälen kleiner Querschnitte.

Es ist bekannt, hierfür Roboter einzusetzen (EP 0 251 907). Der Roboter wird in den Kanal eingefahren und ist mit Dübeln als Befestigungselemente versehen. Das im Kanal befindliche Kabel wird durch die Andruckeinrichtung des Roboters aufgenommen und durch die vorhandene Bohreinheit positioniert. Die Dübel werden in die Bohrlöcher unter gleichzeitiger Befestigung des Kabels an der Kanalinnenwand eingedrückt. Die Befestigung der Kabel mittels Dübeltechnik weist große Nachteile auf, da die Beschädigung der Kanalwände zu Undichtigkeiten und zur Verunreinigung des Grundwassers führen kann. Weiterhin ist die Dübeltechnik nach der DE 16 50 994 und nach der DE 35 01 676 bekannt. Unterschiedliche Schellenformen werden hierbei mit der Bohr-/Dübeltechnik angebracht. Die Nachteile dieser Technik treten ebenfalls auf.
Bekannt ist auch die GB 21 29 627, die einerseits die Einbringung eines Kabelschutzkanals über die gesamte Länge mittels Haftband mit anschließendem Aufspritzen eines Mittels zur endgültigen Befestigung des Kabelschutzkanals an der Kabelrohroberfläche und andererseits die Befestigung des Kabels mittels Halteclips, die durch die Bohr-/Dübeltechnik an die Kanalrohrwand angebracht und mit einem Metallgitter über die gesamte Länge des Kanals geschützt sind, beschreibt.
Die Nachteile des Verfahrens liegen darin, dass es nicht bei von oben zugeführten Hausanschlüssen zur Anwendung kommen kann oder das Bohren zur Anwendung kommt.

In der EP 0 158 416 wird auch die Installation eines Kommunikationskabels beschrieben, die derart gestaltet wird, dass zunächst in den vorhandenen Entwässerungskanal ein im oberen Bereich in Längsrichtung geschlitztes Rohr eingebracht und anschließend in den Schlitz ein Schutzrohr eingezogen wird. Dieses Verfahren ist sehr aufwendig und verdeckt die gesamten Anschlüsse und verringert den Kanalquerschnitt.

Aufgabe der Erfindung ist es, ein Verfahren und eine Vorrichtung zum Einbringen, Positionieren und Befestigen von Bauteilen, insbesondere von Rohren, Kabeln, Stangen oder Drähten in Hohlräumen unterschiedlicher Querschnitte, beispielsweise in Entwässerungskanälen, in denen sich bereits die Bauteile befinden oder mittels eines Roboters eingebracht werden, anzugeben, das ein wirtschaftlicheres Verlegen von Bauteilen ohne aufwendige Aufbrucharbeiten ermöglicht, und die Beschädigung der vorhandenen, Entwässerungskanäle ausgeschlossen wird.

Erfindungsgemäß wird die Aufgabe dadurch gelöst, dass ein in den Grundfunktionen an sich bekannter und mit zusätzlichen auf das Verfahren abgestimmten erforderlichen Greif-, Positionier- und Fixiereinrichtungen versehener Roboter, der entweder selbst fährt oder per Seilzug durch den Hohlraum gezogen wird, entweder ohne Befestigungselemente oder mit Befestigungselementen bestückt wird, in an sich bekannter Weise in den Hohlraum eingefahren und das Bauteil, das bereits im Hohlraum liegt, oder vom Roboter im gleichen Arbeitsvorgang eingebracht wird, positioniert wird und die Befestigungselemente, die entweder mit dem Bauteil eingezogen werden oder einem Magazin, das sich vor, in oder hinter dem Roboter befindet, entnommen und in vorgewählten Positionen im Hohlraum aufgenommen werden, in Relation zum Bauteil und zur Innenfläche des Hohlraumes gebracht, zum Scheitel des Hohlraumes hin angedrückt werden, so dass das Bauteil zur Innenfläche des Hohlraumes hin verspannt und fixiert wird.
Die Befestigungselemente werden zur Unterstützung der Haftungswirkung und der eventuellen Hohlraumbeseitigung durch Spannen oder durch Spannen und Bestreichen der der Hohlraumfläche zugewandten Seite der Befestigungselemente mit einem dichtungsähnlichen Klebstoff oder durch Bestreichen der Fläche des Hohlraumes mit einem schnellklebenden Mittel fixiert. Ist ein Einbringen des Befestigungselementes als Spannelement nicht möglich, erfolgt die Fixierung des Befestigungselementes durch Kleben oder Vergussmasse.

Desweiteren werden die Befestigungselemente aus dem Magazin in gestapelter Form, entweder in dichtester Packung hintereinander oder übereinander oder nebeneinander oder schräg versetzt oder in Kombination dieser Lagerungen in vorgespanntem oder verformtem Zustand oder durch das Magazin vorgespannt oder verformt in den Hohlraum eingebracht.
Das erfindungsgemäße Verfahren wird bei Bauteilen, wie beispielsweise bei Rohren, Kabeln, Stangen oder Drähten eingesetzt werden.

Die erfindungsgemäße Vorrichtung zur Durchführung des Verfahrens besteht aus einem an sich bekannten Roboter mit Grundeinheit, einer Andruckeinrichtung zur Aufnahme des Bauteiles und einer bekannten Kamera zur Überwachung des Fahr- und Arbeitsvorganges sowie einer Greif-, Positionier- und Fixiereinrichtung, sowie gegebenen falls mit einer Klebeeinrichtung und mit einem oder mehreren Magazinen zur Aufnahme der Befestigungselemente und gegebenen falls Vorspannentlastungseinrichtung und bei Verwendung von Endlosmaterial mit einer Schneideinrichtung zum Abschneiden dieses Materials für die Befestigungselemente oder einer Kombination dieser Einrichtungen.

Die erfindungsgemäße Greif-, Positionier- und Fixiereinrichtung besteht aus einer Andruck- und Führungseinrichtung. Diese Führungseinrichtung besteht aus einer oder mehreren Führungsrollen oder einer oder mehreren Führungsscheiben oder einer oder mehreren Führungssegmenten oder einem oder mehreren mit Werkzeug bestückten Führungsarmen oder aus einer Kombination dieser gegebenenfalls beweglichen und/oder verschiebbaren Elemente.

Die Greif-, Positionier- und Fixiereinrichtung ist als eine Aufnahmescheibe, die drehbar oder drehbar und in allen Richtungen schwenkbar ist und sich vor, in oder hinter einem an sich bekannten Roboter befindet, ausgebildet. Die Aufnahmescheibe besteht aus einem oder mehreren Führungselementen, die mit einer oder mehreren Haltevorrichtungen zum Halten des Befestigungselementes während des Greif-, Positionier- und Fixiervorganges versehen sind. Das Bestücken der Aufnahmescheibe mit dem Befestigungselement aus einem Magazin erfolgt durch eine Vorschubeinrichtung.
Die Aufnahmescheibe ist kleiner als der Kanaldurchmesser und befindet sich vor, in oder hinter dem Roboter.
Die Bewegung der Aufnahmescheibe erfolgt mittels hydraulischem oder pneumatischem oder elektrischem Antrieb oder aus einer Kombination dieser Antriebsarten.
Die Führungselemente sind als Segmente oder Rollen oder Gleitkörper oder Stifte oder als eine Kombination dieser Teile ausgebildet.
Bei der Aufnahme von verformten oder von während der Aufnahme zu verformenden Befestigungselementen müssen die Führungselemente der Kontur des Befestigungselementes angepasst sein, oder die Kontur des Befestigungselementes wird der Form des Führungselementes angepasst. Der Fixiervorgang des Befestigungselementes erfolgt durch Bewegung der Führungselemente in radialer und/oder axialer Richtung.
Bei der Aufnahme von Befestigungselementen mit Verriegelung ist ein Führungselement derart ausgebildet, dass die Enden zum Spannen des Befestigungselementes beim Fixiervorgang auseinanderbewegt werden. Der Mechanismus des Auseinanderbewegens ist abhängig von der Art der Verriegelung des Befestigungselementes. Das Auseinanderbewegen erfolgt durch an sich bekannte Elemente wie Zahnräder, Zahnstangen, Schneckenräder; Zylinder, Gestänge oder Seile in radialer und/oder axialer Richtung.

Die Führungselemente bewegen sich einzeln oder zu mehreren gleichzeitig oder alle gleichzeitig.

Bei der Ausbildung der Führungselemente als Segmente sind ein oder mehrere oder alle Segmente mit einer oder mehreren Aussparungen unterschiedlicher geometrischer Formen für die Aufnahme der Einbuchtung des Befestigungselementes versehen.
Sie können aber auch ohne Aussparungen ausgebildet sein. Ob die Segmente mit oder ohne Aussparung versehen sind, wird durch das verwendete Befestigungselement vorgegeben.
Die Segmente sind senkrecht zur Hauptachse der Aufnahmescheibe entweder in einer Ebene oder versetzt in axialer Richtung angeordnet.
Zur Sicherung des Befestigungselementes während oder nach dem Aufbringen auf die Aufnahmescheibe gegen das Aufschnellen werden eine oder mehrere Haltevorrichtungen genutzt.
Die Haltevorrichtung besteht aus einem Klemmmechanismus oder einer Magnet- oder Ansaugeinheit oder aus einer Kombination dieser Möglichkeiten. Die Haltevorrichtung ist integriert in die Aufnahmescheibe oder als separates Bauteil ausgebildet. Das separate Bauteil besteht aus einem Korb oder aus einem kappenähnlichen Gebilde.

Die Bewegung der Führungselemente und der Haltevorrichtung, wenn diese aus mechanischen Teilen bestehen, erfolgt durch einen hydraulischen, pneumatischen oder elektrischen Antrieb oder aus einer Kombination dieser Antriebsarten.

Die Bewegung wird begonnen oder beendet durch Betätigen eines oder mehrerer

Schalter oder durch Voreinstellung eines oder mehrerer Kraftbegrenzer.

Die Befestigungselemente sind als Spannelemente ausgebildet und werden gegebenenfalls vor der Fixierung mit zusätzlich aufgebrachten dichtungsähnlichem Klebstoff versehen. Diese Teile sind aus federndem Material, die sich nach dem Spannen dem jeweiligen Querschnitt des Hohlraumes anpassen.
Die Befestigungselemente zur Aufnahme der Bauteile bestehen aus glattem Material oder aus Material mit abgekanteten Rändern oder angefasten Kanten oder sind zur Erhöhung der dauerhaften Spannwirkung und des Widerstandsmomentes profiliert oder bestehen aus Profilen unterschiedlicher geometrischer Querschnitte, wie beispielsweise Rund- oder Rechteckprofil innen hohl oder aus Vollwerkstoff.

Die Befestigungselemente sind entweder ohne oder mit Einbuchtungen oder integriertem Hohlraum unterschiedlicher geometrischer Formen versehen, wie beispielsweise rauten-, v- und u-förmig oder halbrund. Diese sind als geschlossene Elemente oder geteilt mit überlappender Anordnung der Enden oder nicht über den gesamten Umfang des Entwässerungskanals reichende offene Elemente, nur über mindestens die Hälfte des Umfangs des Entwässerungskanals reichend oder als offene Elemente mit einer Verriegelungsmöglichkeit versehen oder in Form gespreizter Ringe ausgebildet. Durch konische Ausbildung der Einbuchtungen können die Befestigungselemente gestapelt werden.

Eine weitere Ausgestaltung der erfindungsgemäßen Vorrichtung sieht vor, dass die Befestigungselemente in vorhandene Spalte der Hohlraumverbindungen eingebracht sind. Die Haltewirkung kann durch flexible, schnellabbindende, auch während des Abbindevorgangs aufquellende Vergussmasse und/oder eine Verspannung gegen das Entwässerungskanalrohrmaterial erzielt werden.

Die Dicke der Befestigungselemente ist so gering wie möglich zu halten, um zu verhindern, dass sich nach dem Einbau in dem Hohlraum Feststoffe nicht an den Befestigungselementen verfangen und zu Verstopfungen führen. Das Durchlaufen und der Arbeitsvorgang des Roboters erfolgt mittels Kameraüberwachung.

Der Abstand der Befestigungselemente ist durch die Steifigkeit des Kabels vorgegeben und ist abhängig von der Konstruktion des Hohlraumes.
Obwohl es zweckmäßig ist, die zu bestückenden Hohlräume vorher zu reinigen, kann das erfindungsgemäße Verfahren und die zugehörige Vorrichtung auch bei in Betrieb befindlichen Hohlräumen ausgeführt werden.

Die Erfindung soll nachstehend an sieben Ausführungsbeispielen näher erläutert werden:

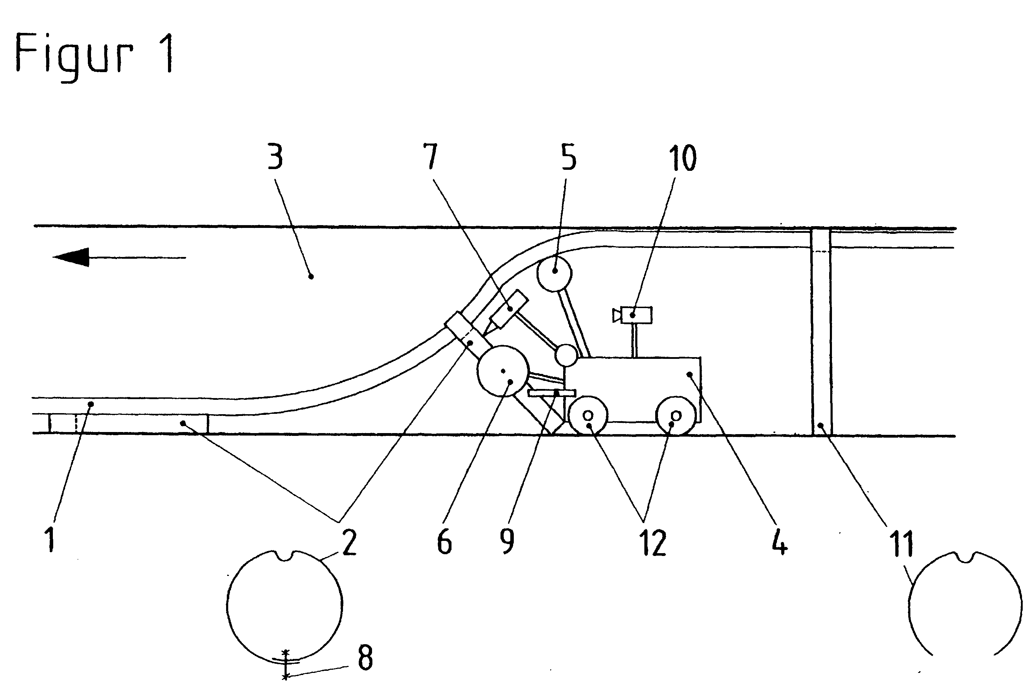

Das erste Ausführungsbeispiel zeigt in Figur 1 ein Verfahren, bei dem das Bauteil 1 mit den daran befestigten Befestigungselementen 2 vor der Befestigung in den Hohlraum 3 eingezogen wird.
Die Befestigungselemente 2 sind in einem Zustand, kleiner als der Entwässerungskanalinnendurchmesser, in entsprechenden Abständen am Bauteil 1 befestigt. Danach wird ein Roboter 4 mit Grundeinheit zur endgültigen Positionierung der Befestigungselemente 2 und zur Befestigung des Bauteile 1, vorzugsweise im oberen Bereich des Hohlraumes 3, in den Hohlraum 3 eingebracht. Das Bauteil 1 und die Befestigungselemente 2 liegen in Fahrtrichtung gesehen vor dem Roboter 4. Sie werden mit der Andruckrolle 5, vorzugsweise gegen den oberen Bereich des Hohlraumes 3 gedrückt. Danach werden die Befestigungselemente mit der Greif-, Positionier- und Fixiereinrichtung 6 des Roboters 4 gefasst, aufgenommen und gegebenenfalls aus der schwenkbar angebrachten Klebeeinrichtung 7 mit dichtungsähnlichem Klebstoff versehen und positioniert. Danach wird die Vorspannung, beispielsweise gehalten durch den Stift 8, durch die Vorspannungsentlastungseinrichtung 9 gelöst und durch die Greif-, Positionier- und Fixiereinrichtung 6 an die Rohrinnenfläche des Hohlraumes 3 angedrückt. Dadurch entsteht ein fester Sitz zwischen Bauteil 1 und Rohrinnenfläche des Hohlraumes 3. Die Greif-, Positionier- und Fixiereinrichtung 6 ist zur Durchführung von Richtungsänderungen dreh- und/oder schwenkbar gestaltet. Der Arbeitsvorgang wird von einer Kamera 10 überwacht. Dieser Vorgang ist mit dem fixierten Befestigungselement 11 abgeschlossen.

Der Roboter 4 kann durch Veränderungen der Andruckrolle 5, der Greif-, Positionierund Fixiereinrichtung 6 oder der Fahreinrichtung 12 an unterschiedliche Kanaldurchmesser angepasst werden.
Für dieses Ausführungsbeispiel kommen die Befestigungselemente 2 nach Figur 5, die als geschlossene Elemente mit oder ohne Einbuchtungen durch Verformung vorgespannt sind, nach Figur 6, die als offene Befestigungselemente 2 mit oder ohne Einbuchtungen, die in vorgespanntem Zustand in den Hohlraum 3 eingebracht werden, nach Figur 7, die als offene Elemente mit überlappenden Enden mit oder ohne Einbuchtung ausgebildet sind und die in vorgespanntem Zustand in den Hohlraum 3 eingebracht werden, nach Figur 8, die als offene Elemente mit Verriegelungsmöglichkeit mit oder ohne Einbuchtung durch Verformung oder überlappenden Enden, die in vorgespanntem Zustand in den Hohlraum 3 eingebracht werden und einige Elemente nach Figur 9, die anstelle der Einbuchtung mit einem Höhlraum, dessen Haltesteg geschlossen, geschlitzt oder geöffnet sein kann, versehen sind und offen oder geschlossen mit oder ohne Verriegelungsmöglichkeit ausgestaltet sind, zur Anwendung.

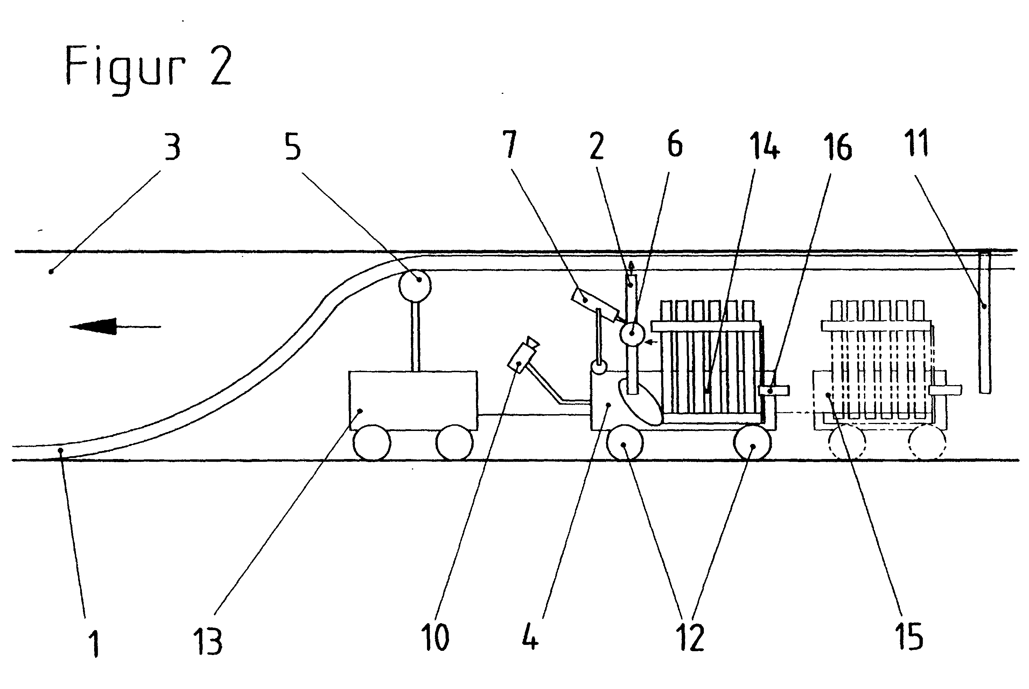

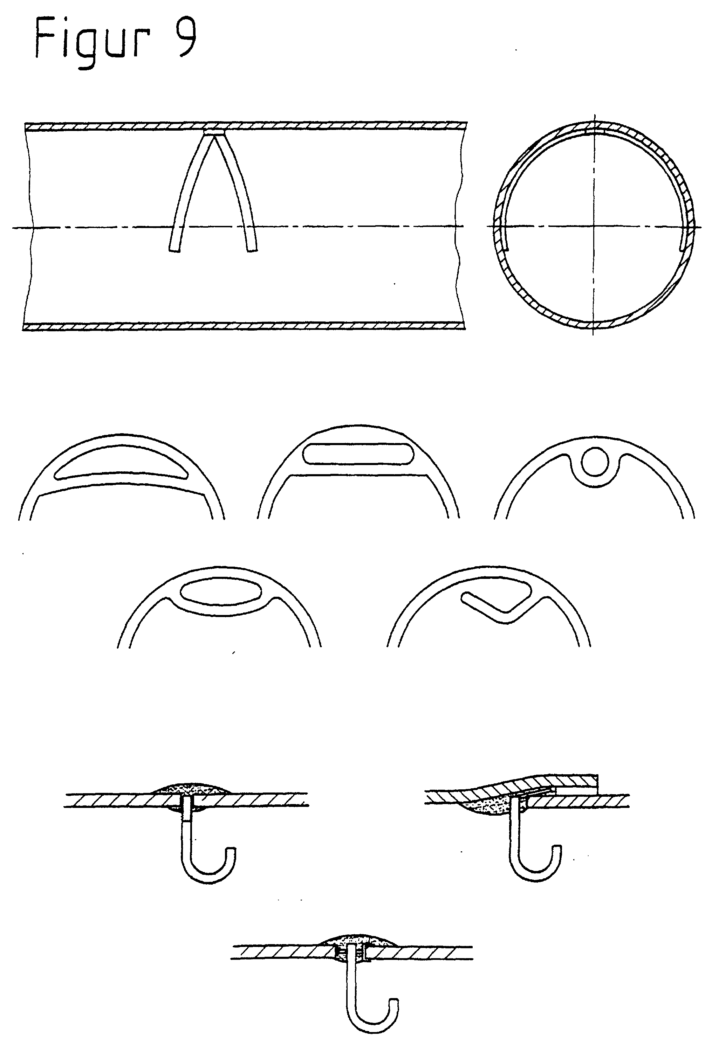

Das zweite Ausführungsbeispiel zeigt in Figur 2 ein Verfahren, bei dem ebenfalls ein Bauteil 1 in einen Hohlraum 3 eingezogen wird, jedoch werden die Befestigungselemente 2 erst nachträglich eingebaut. Das Einbringen des Roboters, das Positionieren und Befestigen der Befestigungselemente 2 erfolgen entsprechend dem ersten Ausführungsbeispiel, jedoch liegen die Befestigungselemente 2 vorgespannt in einem Magazin 13 vor dem Roboter 4 oder in einem Magazin 14 im Roboter oder in einem Magazin 15 hinter dem Roboter. Deren Entnahme erfolgt gegebenenfalls mit Unterstützung durch eine Vorschubeinrichtung 16.
Für dieses Ausführungsbeispiel werden die gleichen Befestigungselemente 2 wie im ersten Ausführungsbeispiel benutzt und zusätzlich das Befestigungselement 2 nach Figur 9, das als gespreizte Ringe ausgebildet ist.

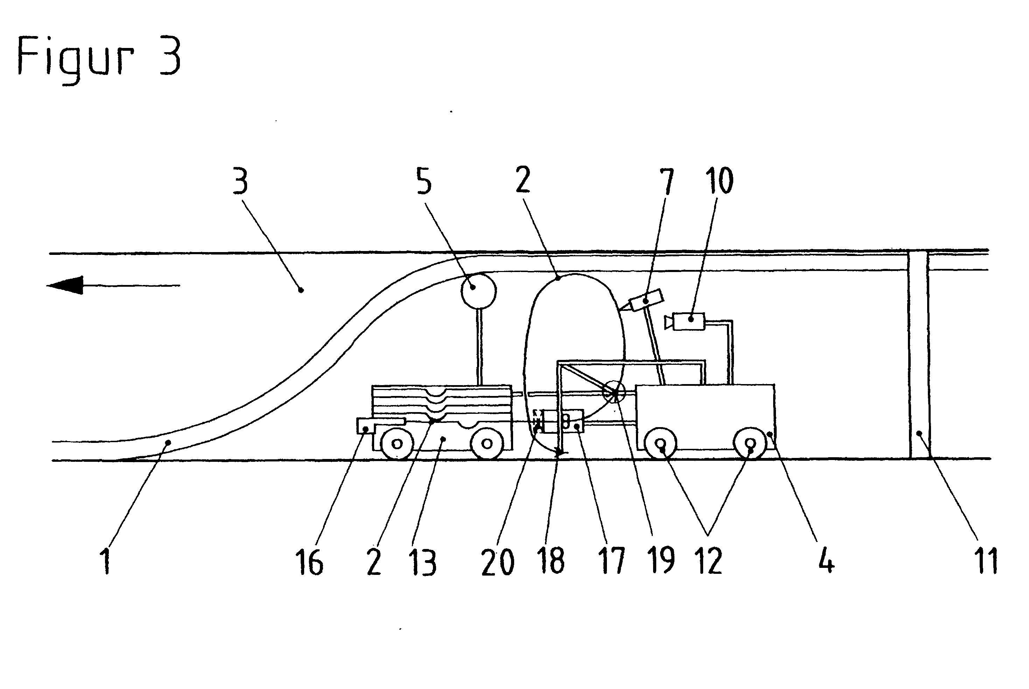

Das dritte Ausführungsbeispiel zeigt in Figur 3 ein Verfahren, bei dem ebenfalls das Bauteil 1 in den Hohlraum 3 eingezogen und der Roboter 4 entsprechend dem ersten Ausführungsbeispiel eingebracht wird, jedoch liegen die Befestigungselemente 2 gegenüber dem zweiten Ausführungsbeispiel nicht vorgespannt im Magazin. Die Befestigungselemente 2 werden mit der Greifeinrichtung 17 des Roboters 4 und gegebenenfalls mit Unterstützung durch eine Vorschubeinheit 16 dem Magazin 13 entnommen. Das Vorspannen der Befestigungselemente 2 erfolgt durch Greifen des Anfangs der Befestigungselemente 2 mit der Führungszange 18 und gleichzeitiger Vorschub- und gegebenenfalls Drehbewegung oder Schwenkbewegung oder Dreh- und

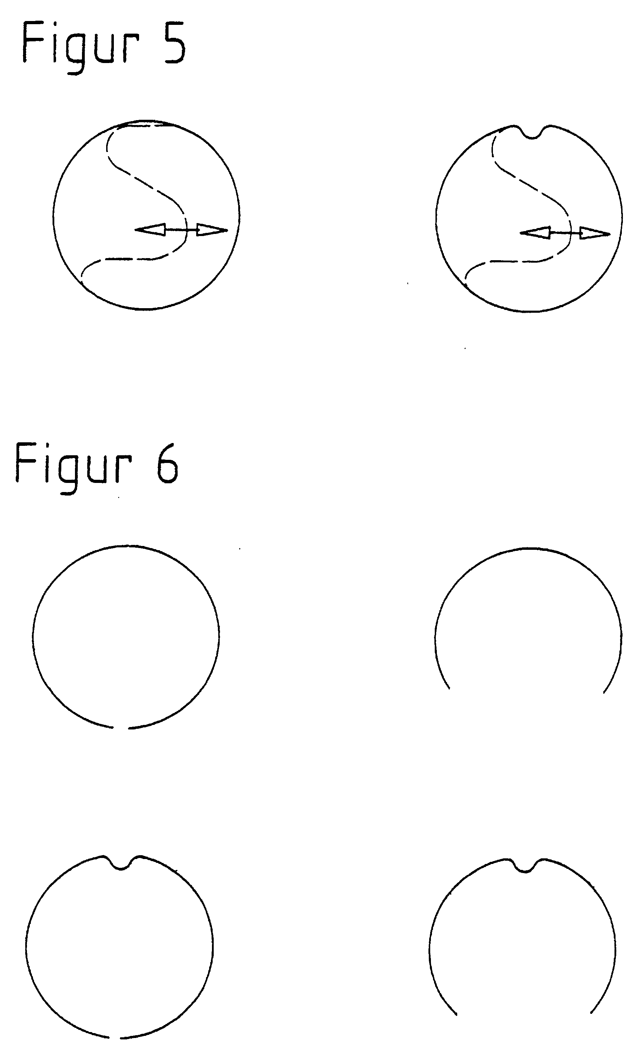

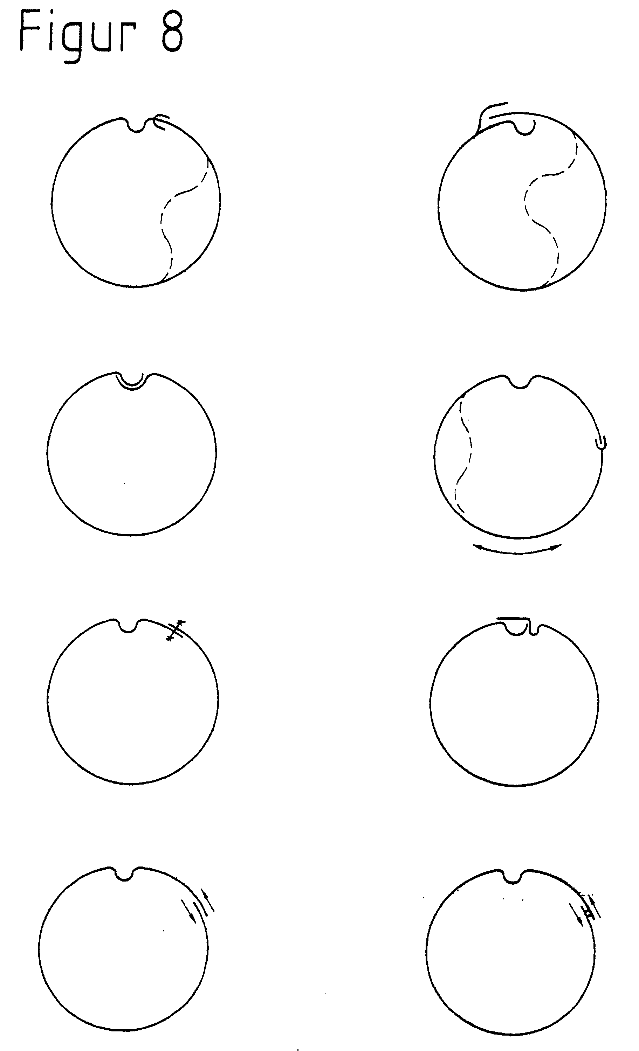

Schwenkbewegung quer zur Achse des Hohlraumes 3 so lange, bis das Ende des Befestigungselementes 2 mit der Führungszange 19 gegriffen wird. Bei Verwendung von Endlosmaterial für die Befestigungselemente 2 wird das Material das sich im Magazin 13, 14 oder 15 befindet, oder während des gesamten Arbeits- und Fahrvorganges des Roboters 4 nachgeführt wird, entsprechend dem Kanalquerschnitt auf Länge mittels der Schneideinrichtung 20 abgeschnitten.
Die Befestigungselemente 2 können ebenfalls aus der in allen Bewegungsrichtungen arbeitenden Klebeeinrichtung 7 mit dichtungsähnlichem Klebstoff versehen werden. Die Positionierung und Fixierung erfolgt durch Andrücken der Befestigungselemente 2 mit den Führungszangen 18 und 19 an die Innenfläche des Hohlraumes 3.
Dadurch entsteht wiederum ein fester Sitz zwischen Bauteil 1 und Innenfläche des Hohlraumes 3. Die Vorschubeinrichtung 17 und die Führungszangen 18 und 19 sind zur Durchführung von Richtungsänderungen beweglich gestaltet. Der Arbeitsvorgang wird ebenfalls von einer Kamera 10 überwacht und ist mit dem fixierten Befestigungselement 11 abgeschlossen.
Der Roboter 4 kann durch Veränderungen der Andruckrolle 5, der Führungszangen 18 und 19 oder der Fahreinrichtung 12 an unterschiedliche Hohlraumdurchmesser angepasst werden.
Für dieses Ausführungsbeispiel kommen die gesamten Befestigungselemente 2, die in den Figuren 5 bis 9 dargestellt sind, zur Anwendung, wobei die in Figur 9 dargestellten Befestigungselemente 2 mit Hohlraum und geschlossenem Steg nicht verwendet werden können.

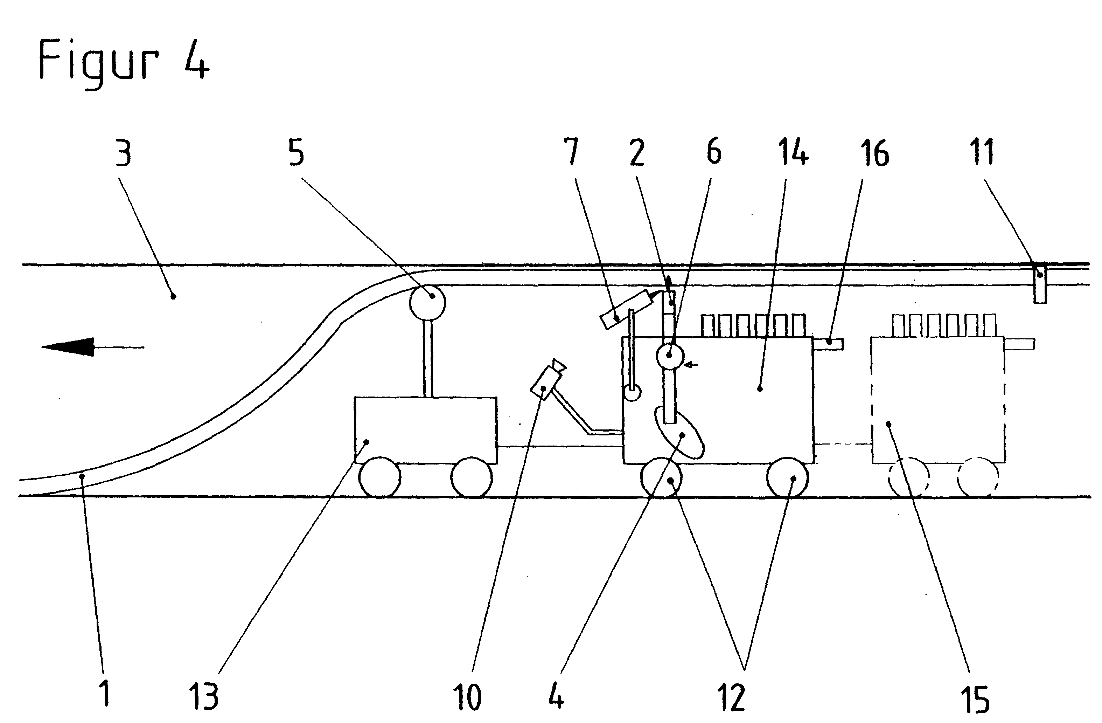

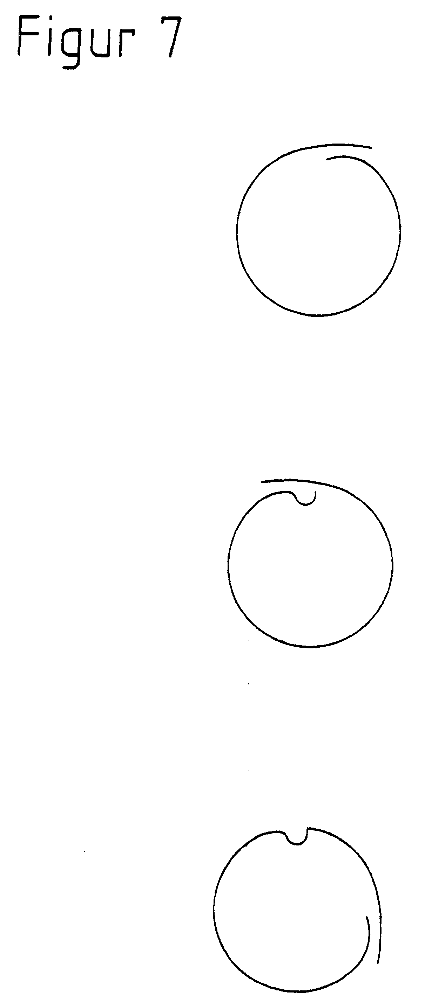

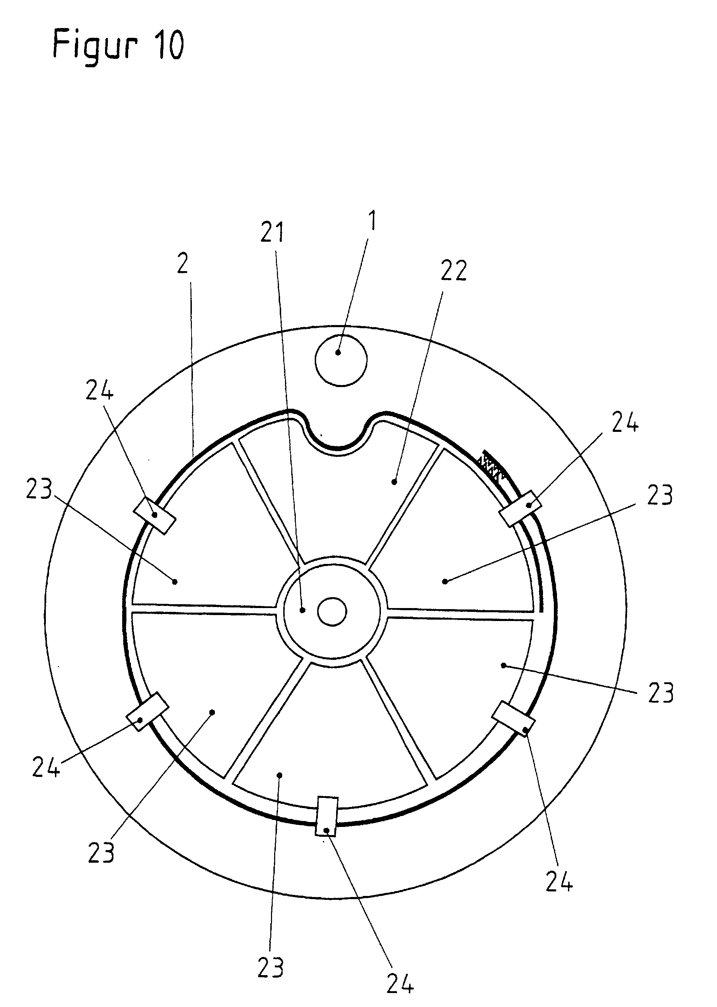

Das vierte Ausführungsbeispiel zeigt in Figur 4 ein Verfahren, bei dem die Befestigungselemente 2 angeklebt werden. Das Einbringen des Bauteiles 1 und des Roboters 4 in den Hohlraum 3 erfolgt analog dem zweiten Ausführungsbeispiel, jedoch liegen die Befestigungselemente 2 lose in dem Magazin 13, 14 oder 15. Die Befestigungselemente 2 werden mit der Greif-, Positionier- und Fixiereinrichtung 6 des Roboters 4, gegebenenfalls mit Unterstützung durch eine Vorschubeinrichtung 16, entnommen, und aus der in allen Bewegungsrichtungen arbeitenden Klebeeinrichtung 7 mit einem schnellklebenden Mittel versehen und positioniert. Die Fixierung erfolgt durch Andrücken der Befestigungselemente 2 mit der Greif-, Positionier- und Fixiereinrichtung 6 an die Rohrinnenfläche des Hohlraumes 3. Dadurch entsteht eine kraftschlüssige Verbindung zwischen Bauteil 1 und Rohrinnenfläche des Hohlraumes 3.
Die weiteren Verfahrensschritte entsprechen dem zweiten Ausführungsbeispiel. Die Anpassung des Roboters an unterschiedliche Hohlraumquerschnitte erfolgt nach dem ersten Ausführungsbeispiel. Für dieses Ausführungsbeispiel kommen die Befestigungselemente 2 nach Figur 6 und nach Figur 9, ausgenommen die, die mit geschlossenem Hohlraum und als geschlossene Elemente ausgebildet sind, zur Anwendung.
Das fünfte Ausführungsbeispiel zeigt in Figur 10 die Greif-, Positionier- und Fixiereinrichtung 6, die aus einer in der Kanalachse angeordneten und drehbar gelagerten Aufnahmescheibe 21, die wiederum aus in radialer Richtung zur Kanalwand sich bewegender Führungselemente, die als Segmente 22 und 23 ausgebildet sind, besteht.
Das Segment 22 ist mit einer Aussparung für die Aufnahme der Einbuchtung des Befestigungselementes 2 versehen.
An den Segmenten 23 sind Haltevorrichtungen 24 angebracht, die das Befestigungselement 2 nach dem Greifvorgang festspannen und während des Positionier- und Fixiervorganges sichern.
Das Befestigungselement 2 wird in vorgespanntem Zustand von einem vor, hinter oder in dem an sich bekannten Roboter 4 angebrachten Magazin 13, 14 oder 15 durch die Greifeinrichtung auf die Aufnahmescheibe 21 geschoben und mit den Haltevorrichtungen 24 so festgehalten, dass ein Aufschnellen des Befestigungselementes 2 während der Bewegung der Segmente 22 und 23 unterbleibt.

Die Aufnahme des Bauteiles 1 wird durch die Bewegung des Segmentes 22, in dem sich die Einbuchtung des Befestigungselementes 2 befindet, in radialer Richtung erreicht.

Die Positionierung des Bauteiles 1 erfolgt durch Drehen der Aufnahmescheibe 21 in Umfangsrichtung.

Die endgültige Fixierung des Befestigungselementes 2 erfolgt durch Bewegung der Segmente 23 in radialer Richtung.
Die Haltevorrichtungen 24 geben automatisch zum Ende des Fixiervorganges das Befestigungselement 2 wieder frei.
Die Bewegungen der Aufnahmescheibe 21, der Segmente 22 und 23 und der Haltevorrichtungen 24 erfolgen durch hydraulischen, pneumatischen oder elektrischen Antrieb.

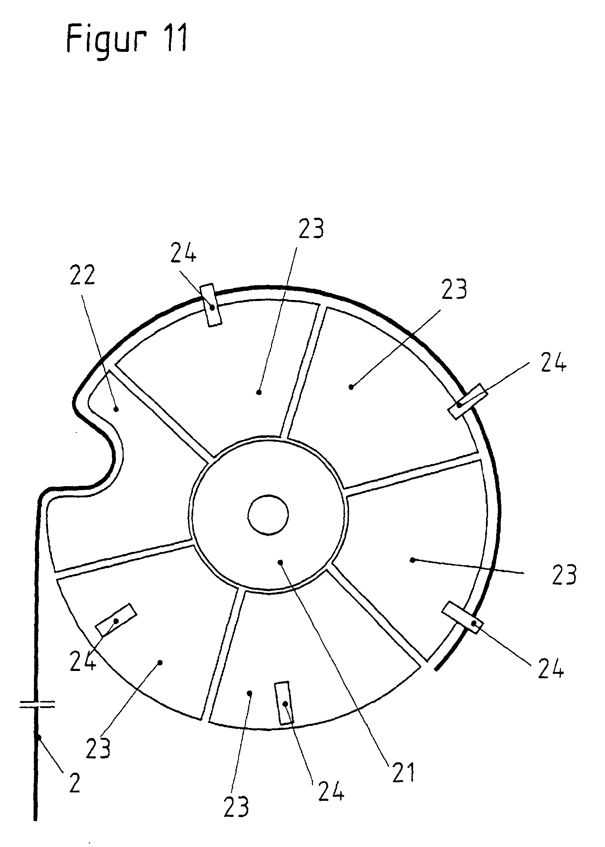

Das sechste Ausführungsbeispiel zeigt in Figur 11 die Greif-, Positionier- und Fixiereinrichtung 6, die aus einer in der Kanalachse angeordneten drehbar und schwenkbar gelagerten Aufnahmescheibe 21, die wiederum aus in radialer Richtung sich bewegenden Führungselementen, die als Segmente 22 und 23 ausgebildet sind, besteht.
Das Segment 22 ist mit einer Aussparung für die Aufnahme der Einbuchtung des Befestigungselementes 2 versehen.
An den Segmenten 23 sind Haltevorrichtungen 24 angebracht, die das Befestigungselement 2 während des Greif-, Positionier- und Fixiervorganges festhalten.
Das Befestigungselement 2 wird in nichtvorgespanntem Zustand von einem vor, hinter oder in dem an sich bekannten Roboter angebrachten Magazin 13, 14 oder 15 durch die Greifeinrichtung auf die Aufnahmescheibe 21 geschoben.
Durch Drehen der zur Kanalachse geneigten Aufnahmescheibe 21 erfolgt die Aufnahme des Befestigungselementes 2 auf die Segmente 22 und 23. Die an den Segmenten 23 befestigten Haltevorrichtungen 24 werden einzeln wegeabhängig über das Befestigungselement 2 geschoben, so dass ein Aufschnellen des Befestigungselementes 2 bei der Bewegung der Segmente 22 und 23 unterbleibt.
Die geneigte Aufnahmescheibe 21, mit dem sich darauf befindenden Befestigungselement 2, wird in die Montageposition senkrecht zur Hohlraumachse gebracht.

Die weitere Ausbildung entspricht dem fünften Ausführungsbeispiel.

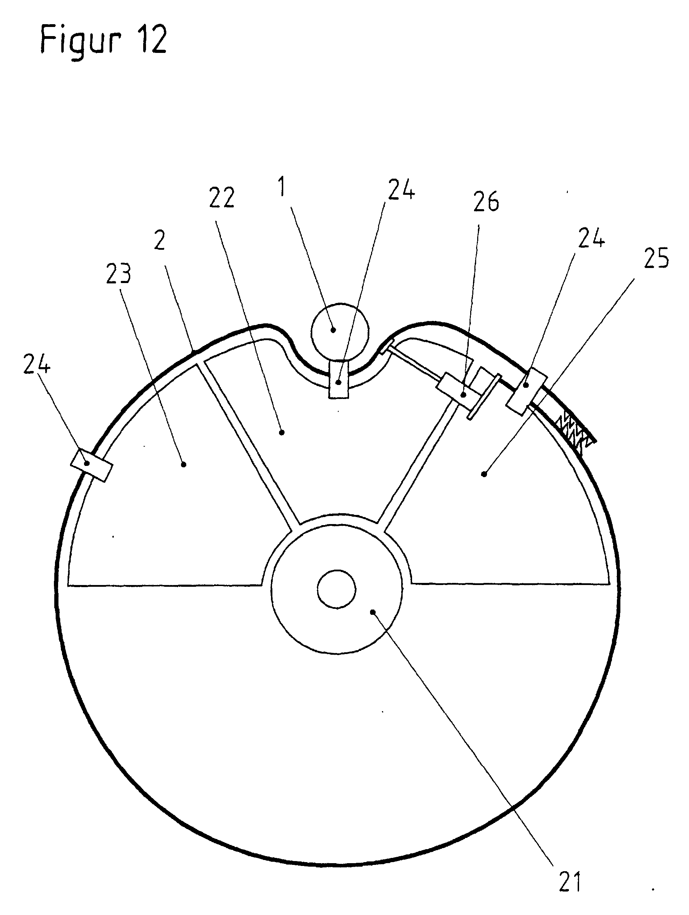

Das siebente Ausführungsbeispiel zeigt in Figur 12, die Greif-, Positionier- und Fixiereinrichtung 6, die aus einer in der Hohlraumachse angeordneten drehbar gelagerten Aufnahmescheibe 21, die aus in radialer Richtung zur Hohlraumwand sich bewegenden Führungselementen, die als Segmente 22, 23 und 25 ausgebildet sind, besteht.
Das Segment 22 ist mit einer Aussparung für die Aufnahme der Einbuchtung des Befestigungselementes 2 versehen. Das Segment 25 ist mit einer Schiebevorrichtung 26 zum Spannen des Befestigungselementes 2 durch Auseinanderbewegen der Enden des Befestigungselementes 2 versehen.
An den Segmenten 22, 23 und 25 sind Haltevorrichtungen 24 angebracht, die das Befestigungselement 2 während des Positionier- und Fixiervorgangs festhalten.
Das Befestigungselement 2 wird in vorgespanntem Zustand von einem vor, hinter oder in dem an sich bekannten Roboter 4 angebrachten Magazin 13, 14 oder 15 durch die Greifeinrichtung auf die Aufnahmescheibe 21 geschoben.
Die Aufnahme des Bauteiles 1 wird durch die Bewegung der Aufnahmescheibe 21 in radialer Richtung erreicht. Die Positionierung des Kabels 1 erfolgt durch Drehen und Bewegen der Aufnahmescheibe 21.
Die endgültige Fixierung des Befestigungselementes 2 erfolgt durch Betätigung der am Segment 25 angebrachten Schiebevorrichtung 26 zum Auseinanderbewegen der Enden des Befestigungselementes 2.
Die Haltevorrichtungen 24 geben automatisch zum Ende des Fixiervorganges das Befestigungselement 2 wieder frei.
Die Bewegungen der Aufnahmescheibe 21, der Segmente 22, 23 und 25, der Haltevorrichtungen 24 und der Schiebevorrichtung 26 erfolgen durch hydraulischen, pneumatischen oder elektrischen Antrieb.

## Patentansprüche

1. Verfahren zum Einbringen, Positionieren und Befestigen von Bauteilen, insbesondere von Rohren, Kabeln, Stangen oder Drähten in Hohlräumen unterschiedlicher Querschnitte, beispielsweise in Entwässerungskanälen, mittels eines Roboters, der entweder selbst fährt oder per Seilzug durch den Kanal gezogen wird und der mit oder ohne Befestigungselementen bestückt, in den Hohlraum eingefahren und das Bauteil aufgenommen und positioniert wird,
**dadurch gekennzeichnet, dass**
die Befestigungselemente (2) entweder mit dem Bauteil (1) in den Hohlraum (3) eingezogen werden oder einem Magazin (13, 14, 15), das vor, in oder hinter dem Roboter (4) angeordnet ist, entnommen und in vorgewählten Positionen im Hohlraum aufgenommen werden, in Relation zum Bauteil (1) gebracht, zum Scheitel des Hohlraumes (3) hin angedrückt und durch Spannen oder durch Spannen und Bestreichen der der Hohlraumfläche (3) zugewandten Seite der Befestigungselemente (2) mit einem dichtungsähnlichen Klebstoff oder durch Kleben und Bestreichen der Fläche des Hohlraumes (3) mit einem schnellklebenden Mittel fixiert werden.

2. Verfahren nach dem Anspruch 1
**dadurch gekennzeichnet, dass**
die Befestigungselemente (2) aus dem Magazin (13, 14, 15) in gestapelter Form, entweder in dichtester Packung hintereinander oder übereinander oder nebeneinander oder schräg versetzt oder in Kombination, in vorgespanntem oder verformtem Zustand oder durch das Magazin (13, 14, 15) vorgespannt oder verformt, in den Hohlraum (3) eingebracht werden oder sich als Endlosmaterial innerhalb oder außerhalb des Magazins (13, 14, 15) befinden.

3. Verfahren nach den Ansprüchen 1 und 2,
**dadurch gekennzeichnet, dass**
die Befestigungselemente (2) vorzugsweise in Spalten der Hohlraumverbindung fixiert werden.

4. Vorrichtung zur Durchführung des Verfahrens nach den Ansprüchen 1 bis 3, bestehend aus einem Roboter mit einer Grundeinheit und Andruckeinrichtung zur Aufnahme des Bauteiles, mit einer Kameraüberwachung des Fahr- und Arbeitsvorganges
**dadurch gekennzeichnet, dass**
der Roboter (4) mit einer Greif-, Positionier- und Fixiereinrichtung (6), die aus einer Andruck- und/oder Führungseinrichtung besteht, sowie gegebenen falls mit einer Klebeeinrichtung (7) und mit einem oder mehreren Magazinen (13) oder (14) oder (15) zur Aufnahme der Befestigungselemente (2) und gegebenen falls mit einer Vorspannentlastungseinrichtung (9) und bei Verwendung von Endlosmaterial mit einer Schneideinrichtung (20) für das Abschneiden des Materials für die Befestigungselemente (2) versehen ist.

5. Vorrichtung nach dem Anspruch 4,
**dadurch gekennzeichnet, dass**
die Führungseinrichtung aus einer oder mehreren Führungsrollen (17) oder einer oder mehreren Führungsscheiben oder einer oder mehreren Führungssegmenten oder einem oder mehreren mit Werkzeug bestückten Führungsarmen (18) und (19) oder aus einer Kombination dieser gegebenenfalls beweglichen und/oder verschiebbaren Elementen besteht.

6. Vorrichtung nach den Ansprüchen 4 und 5,
**dadurch gekennzeichnet, dass**
die Vorrichtung als eine drehbar oder drehbar und in allen Richtungen schwenkbare Aufnahmescheibe (21) zur Aufnahme der Befestigungselemente (2), die aus einem oder mehreren Führungselementen, die mit einer oder mehreren Haltevorrichtungen (24) zum Halten des Befestigungselementes (2) während des Greif-, Positionier- und Fixiervorganges versehen sind, ausgebildet ist.

7. Vorrichtung nach Anspruch 6,
**dadurch gekennzeichnet, dass**
die Aufnahmescheibe (21) kleiner als der Kanaldurchmesser ist und sich vor, in oder hinter dem Roboter (4) befindet, und die Bewegung der Aufnahmescheibe (21), der Führungselemente und der Haltevorrichtung (24) mittels hydraulischem, pneumatischem oder elektrischem Antrieb, oder aus einer Kombination dieser Antriebsarten, erfolgt.

8. Vorrichtung nach den Ansprüchen 5 bis 7,
**dadurch gekennzeichnet, dass**
die Führungssegmente als (22, 23, 25) Rollen oder Gleitkörper oder Stifte, oder aus einer Kombination dieser Teile, ausgebildet sind.

9. Vorrichtung nach den Ansprüchen 5 bis 8,
**dadurch gekennzeichnet, dass**
die Führungssegmente der Kontur der Befestigungselemente (2) oder umgekehrt angepasst sind.

10. Vorrichtung nach den Ansprüchen 5 bis 9,
**dadurch gekennzeichnet dass**
die Bewegung der Führungssegmente in radialer und/oder axialer Richtung erfolgt.

11. Vorrichtung nach den Ansprüchen 5 bis 10,
**dadurch gekennzeichnet, dass**
ein oder mehrere Segmente (25) mit einem Mechanismus zum Auseinanderbewegen der Enden zum Spannen des Befestigungselementes (2) versehen ist.

12. Vorrichtung nach den Ansprüchen 5 bis 11,
**dadurch gekennzeichnet, dass**
die Führungssegmente mit einer oder mehreren Aussparungen unterschiedlicher geometrischer Formen zur Aufnahme der Einbuchtung des Befestigungselementes (2) oder ohne Aussparung versehen und senkrecht zur Hauptachse der Aufnahmescheibe (21) entweder in einer Ebene oder versetzt in axialer Richtung angeordnet sind.

13. Vorrichtung nach den Ansprüchen 4 bis 12,
**dadurch gekennzeichnet, dass**
die Haltevorrichtung (24) aus einem Klemmmechanismus oder einer Magnet- oder Ansaugeinheit besteht oder aus einer Kombination dieser Einheifen.

14. Vorrichtung nach den Ansprüchen 6 bis 13,
**dadurch gekennzeichnet, dass**
die Haltevorrichtung (24) in die Aufnahmescheibe (21) integriert oder als separates Bauteil, beispielsweise als ein Korb oder ein kappenähnliches Gebilde, ausgebildet ist.

15. Vorrichtung nach den Ansprüchen 6 bis 14,
**dadurch gekennzeichnet, dass**
die Bewegung der Führungssegmente einzeln, gleichzeitig oder zu mehreren gleichzeitig erfolgt.

16. Vorrichtung nach den Ansprüchen 6 bis 15,
**dadurch gekennzeichnet, dass**
der Beginn und das Ende der Bewegungen der Aufnahmescheibe (21), der Führungssegmente und der Haltevorrichtung (24) durch Betätigen eines oder mehrerer Schalter oder durch Voreinstellung eines oder mehrerer Kraftbegrenzer erfolgt.

17. Vorrichtung nach den Ansprüchen 4 bis 16,
**dadurch gekennzeichnet, dass**
die Befestigungselemente (2) Spannelemente sind, die aus federndem Material bestehen und dem Querschnitt des Hohlraumes (3) angepasst sind.

18. Vorrichtung nach den Ansprüchen 4 bis 17,
**dadurch gekennzeichnet, dass**
die Befestigungselemente (2) bei Nichtausbildung als Spannelement vor der Fixierung- mit zusätzlich aufgebrachtem schnell klebenden Mittel versehen sind.

19. Vorrichtung nach den Ansprüchen 4 bis 18,
**dadurch gekennzeichnet, dass**
die Befestigungselemente (2) aus glattem Material oder Material mit abgekanteten Rändern und/oder angefasten Kanten oder aus Profilen unterschiedlicher geometrischer Querschnitte bestehen.

20. Vorrichtung nach den Ansprüchen 4 bis 19,
**dadurch gekennzeichnet, dass**
die Befestigungselemente (2) ohne oder mit Einbuchtungen unterschiedlicher geometrischer Formen, nach oben oder unten offen, oder mit integrierten geschlossenen oder geschlitzten Hohlräumen unterschiedlicher geometrischer Formen versehen sind.

21. Vorrichtung nach den Ansprüchen 4 bis 20,
**dadurch gekennzeichnet, dass**
die Befestigungselemente (2) als geschlossene Elemente oder geteilt mit überlappender Anordnung der Enden oder nicht über den gesamten Umfang des Hohlraumes (3) reichende offene Elemente ausgebildet sind.

22. Vorrichtung nach Anspruch 21,
**dadurch gekennzeichnet, dass**
die offenen Befestigungselemente (2) mit einer Verriegelungseinrichtung versehen sind.

23. Vorrichtung nach den Ansprüchen 21 oder 22,
**dadurch gekennzeichnet, dass**
die offenen Befestigungselemente (2) in Form von gespreizten Ringen ausgebildet sind.

24. Vorrichtung nach den Ansprüchen 4 bis 23,
**dadurch gekennzeichnet, dass**
die Befestigungselemente (2) durch konische Anordnung der Einbuchtungen stapelbar sind.

25. Vorrichtung nach den Ansprüchen 4 bis 24,
**dadurch gekennzeichnet, dass**
die Befestigungselemente (2) in Spalten der Hohlraumverbindungen eingebracht und mit einer flexiblen, schnell abbindenden und/oder aufquellenden Vergussmasse verpresst sind.

## Claims

1. Method of introducing, positioning and fixing components, especially pipes, cables, rods or wires, in cavities of different cross-sections, for example in drainage channels, by means of a robot, which is either self-propelling or drawn through the channel by cable pull and which is equipped or not with fastening elements, is moved in the cavity and receives and positions the component, **characterised in that** the fastening elements (2) are either drawn together with the component (1) into the cavity (3) or removed at a magazine, which is arranged in front of, in or behind the robot (4), and are received in preselected positions in the cavity, are brought in relationship with the component (1), are pressed towards the crest of the cavity (3) and are fixed by clamping or by clamping and coating the side of the fastening elements (2) facing the cavity surface (3) with a seal-like adhesive or by gluing and coating the surface of the cavity (3) with a quick-adhering means.

2. Method according to claim 1, **characterised in that** the fastening elements (2) are introduced from the magazine (13, 14, 15) into the cavity (3) in stacked form, either in densest packing one behind, above or beside the other or obliquely offset or in combination, in prestressed or deformed state or prestressed or deformed by the magazine (13, 14, 15) or are disposed as endless material inside or outside the magazine (13, 14, 15).

3. Method according to claims 1 and 2, **characterised in that** the fastening elements (2) are preferably fixed in columns of the cavity connection.

4. Device for carrying out the method according to claims 1 to 3, consisting of a robot with a base unit and presser device for receiving the component, with a camera monitoring of the travel and working process, **characterised in that** the robot (4) is provided with a gripping, positioning and fixing device (6), which consists of a pressing and/or guiding device, as well as optionally with an adhering device (7) and with one or more magazines (13, 14 or 15) for receiving the fastening elements (2) and optionally with a prestress relief device (9) and in the case of use of endless material with a cutting device (20) for cutting off the material for the fastening elements (2).

5. Device according to claim 4, **characterised in that** the guide device consists of one or more guide rollers (17) or one or more guide discs or one or more guide segments or one or more guide arms (18 and 19) equipped with a tool or of a combination of these optionally movable and/or displacement elements.

6. Device according to claims 4 and 5, **characterised in that** the device is constructed as a rotatable receiving disc (21) or as a rotatable receiving disc (21), which is pivotable in all directions, for receiving the fastening element (2), which consists of one or more guide elements which are provided with one or more holding devices (24) for holding the fastening element (2) during the gripping, positioning and fixing process.

7. Device according to claim 6, **characterised in that** the receiving disc (21) is smaller than the channel diameter and is disposed in front of, in or behind the robot (4) and the movement of the receiving disc (21), the guide elements and the holding device (24) is effected by means of a hydraulic, pneumatic or electric drive or from a combination of these forms of drive.

8. Device according to claims 5 to 7, **characterised in that** the guide segments (22, 23, 25) are constructed as rollers or slide bodies or pins or from a combination of these parts.

9. Device according to claims 5 to 8, **characterised in that** the guide segments are matched to the contour of the fastening elements (2) or conversely.

10. Device according to claims 5 to 9, **characterised in that** the movement of the guide segments takes place in radial and/or axial direction.

11. Device according to claims 5 to 10, **characterised in that** one or more segments (25) is or are provided with a mechanism for movement out of one another of the ends the fastening element (2) for clamping.

12. Device according to claims 5 to 11, **characterised in that** the guide segments are provided with one or more cut-outs of different geometric shapes for receiving the concavity of the fastening element (2) or without a cut-out and are arranged perpendicularly relative to the main axis of the receiving disc (21) either in a plane or offset in axial direction.

13. Device according to claims 4 to 12, **characterised in that** the holding device (24) consists of a clamping mechanism or a magnet unit or suction unit or of a combination of these units.

14. Device according to claims 6 to 13, **characterised in that** the holding device (24) is integrated in the receiving disc or constructed as a separate component, for example as a basket or a cap-like body.

15. Device according to claims 6 to 14, **characterised in that** the movement of the guide segments takes place individually, simultaneously or simultaneously for several.

16. Device according to claims 6 to 15, **characterised in that** the beginning and the end of the movements of the receiving disc (21), the guide segments and the holding device (24) takes place through actuation of one or more switches or through presetting of one or more force limiters.

17. Device according to claims 4 to 16, **characterised in that** the fastening elements (2) are damping elements which consist of resilient material and are matched to the cross-section of the cavity (3).

18. Device according to claims 4 to 17, **characterised in that** the fastening elements (2) if not constructed as clamping elements are provided before the fixing with additional applied quick-adhering means.

19. Device according to claims 4 to 18, **characterised in that** the fastening elements (2) consist of smooth material or material with bent-over edges and/or chamfered edges or of profiles with different geometric cross-sections.

20. Device according to claims 4 to 19, **characterised in that** the fastening elements (2) are provided or not with concavities of different geometric shapes which are open upwardly or downwardly or with integrated closed or slotted cavities of different geometric shapes.

21. Device according to claims 4 to 20, **characterised in that** the fastening elements (2) are constructed as closed elements or divided or not by an overlapping arrangement of the ends of open elements extending over the entire circumference of the cavity (3).

22. Device according to claim 21, **characterised in that** the open fastening elements (2) are provided with a locking device.

23. Device according to claim 21 or 22, **characterised in that** the open fastening elements (2) are constructed in the form of splayed rings.

24. Device according to claims 4 to 23, **characterised in that** the fastening elements (2) can be stacked by conical arrangement of the concavities.

25. Device according to claims 4 to 24, **characterised in that** the fastening elements (2) are introduced into the columns of the cavity connections and are pressed by a flexible, quick bonding and/or swelling casting mass.

## Revendications

1. Procédé pour mettre en place, positionner et fixer des éléments, en particulier des tubes, des câbles, des barres ou des fils dans des volumes creux de différentes sections, en particulier des canaux d'assainissement, au moyen d'un robot qui soit se déplace par lui-même, soit est tiré par un câble dans le canal, qui porte ou non des éléments de fixation, introduit dans le volume creux et accueille et positionne l'élément,
**caractérisé en ce que**
les éléments de fixation (2) ou bien sont introduits dans le volume creux (3) avec l'élément (1), ou bien sont extraits d'un magasin (13, 14, 15) situé devant, sur ou derrière le robot (4) et placés dans des positions choisies à l'avance dans le volume creux, mis en relation avec l'élément (1), appliqués en pression sur le sommet du volume creux (3) et fixés par tension ou par tension et enduction de la face des éléments de fixation (2) en regard de la surface du volume creux (3) au moyen d'un adhésif du genre joint d'étanchéité, ou par collage et enduction de la surface du volume creux (3) au moyen d'un agent de collage rapide.

2. Procédé selon la revendication 1,
**caractérisé en ce que**
les éléments de fixation (2), extraits du magasin (13, 14, 15) où ils sont empilés très serrés les uns derrière les autres ou les uns sur les autres ou les uns à côté des autres ou décalés obliquement ou en combinaison, sont introduits dans le volume creux à l'état précontraint ou façonné, ou après précontrainte ou façonnage effectué par le magasin (13, 14, 15), ou se trouvent à l'intérieur ou à l'extérieur du magasin (13, 14, 15) sous la forme d'un matériau sans fin.

3. Procédé selon l'une quelconque des revendications 1 et 2,
**caractérisé en ce que**
les éléments de fixation (2) sont fixés de préférence dans des fentes de liaison du volume creux.

4. Dispositif pour la mise en oeuvre du procédé selon l'une quelconque des revendications 1 à 3, comprenant un robot avec une unité de base et un dispositif de mise en pression pour accueillir l'élément, ainsi qu'une caméra de surveillance de l'avancement et du travail,
**caractérisé en ce que**
le robot (4) est équipé d'un dispositif (6) de saisie, de positionnement et de fixation composé d'un dispositif d'application sous pression et/ou de guidage, et éventuellement d'un dispositif de collage (7) et d'un ou plusieurs magasins (13) ou (14) ou (15) pour accueillir les éléments de fixation (2) et également d'un dispositif de libération de précontrainte (9) et, dans le cas d'utilisation d'un matériau sans fin, d'un dispositif de coupe (20) pour couper le matériau destiné aux éléments de fixation (2).

5. Dispositif selon la revendication 4,
**caractérisé en ce que**
le dispositif de guidage est composé d'un ou plusieurs galets de guidage (17) ou d'un ou plusieurs disques de guidage ou d'un ou plusieurs segments de guidage ou d'un ou plusieurs bras de guidage (18) et (19) équipés d'un outil, ou d'une combinaison de ces éléments éventuellement mobiles et/ou coulissants.

6. Dispositif selon l'une quelconque des revendication 4 et 5,
**caractérisé en ce que**
le dispositif est un disque de réception (21) tournant ou tournant et basculant dans toutes les directions et servant à accueillir les éléments de fixation (2), ce disque étant constitué par un ou plusieurs éléments de guidage équipés d'un ou plusieurs dispositifs de maintien (24) servant à maintenir l'élément de fixation (2) pendant l'opération de saisie, positionnement et fixation.

7. Dispositif selon la revendication 6,
**caractérisé en ce que**
le dispositif de réception (21) est plus petit que le diamètre du canal et se trouve devant, sur ou derrière le robot (4) et le disque de réception (21), les éléments de guidage et le dispositif de maintien (24) ont leurs mouvements assurés par un entraînement hydraulique, pneumatique ou électrique ou par une combinaison de ces modes d'entraînement.

8. Dispositif selon l'une quelconque des revendications 5 à 7,
**caractérisé en ce que**
les segments de guidage (22, 23, 25) sont constitués par des galets, des corps de glissement ou des broches, ou par une combinaison de ces éléments.

9. Dispositif selon l'une quelconque des revendications 5 à 8,
**caractérisé en ce que**
les segments de guidage sont adaptés au contour des éléments de fixation (2), ou inversement.

10. Dispositif selon l'une quelconque des revendications 5 à 9,
**caractérisé en ce que**
le mouvement des segments de guidage a lieu en direction radiale et/ou axiale.

11. Dispositif selon l'une quelconque des revendications 5 à 10,
**caractérisé en ce qu'**
un ou plusieurs segments (25) sont équipés d'un mécanisme assurant le déplacement relatif des extrémités des éléments de fixation (2) afin de mettre ceux-ci en tension.

12. Dispositif selon l'une quelconque des revendications 5 à 11,
**caractérisé en ce que**
les éléments de guidage présentent un ou plusieurs évidements de formes géométriques diverses pour accueillir la bosse de l'élément de fixation (2), ou ne présentent aucun évidement et sont montés perpendiculairement à l'axe principal du disque de réception (21) soit dans un plan soit en étant décalés en direction axiale.

13. Dispositif selon l'une quelconque des revendications 4 à 12,
**caractérisé en ce que**
le dispositif de maintien (24) est constitué par un mécanisme de serrage ou par une unité agissant par attraction magnétique ou par aspiration ou par une combinaison de ces deux unités.

14. Dispositif selon l'une quelconque des revendications 6 à 13,
**caractérisé en ce que**
le dispositif de maintien (24) est intégré au disque de réception (21) ou est un composant séparé, par exemple sous la forme d'un panier ou d'un objet du genre capuchon.

15. Dispositif selon l'une quelconque des revendications 6 à 14,
**caractérisé en ce que**
les segments de guidage se déplacent individuellement, ou en même temps pour certains ou pour tous.

16. Dispositif selon l'une quelconque des revendications 6 à 15,
**caractérisé en ce que**
le début et la fin des mouvements du disque de réception (21), des segments de guidage et du dispositif de maintien (24) sont obtenus par la manoeuvre d'un ou plusieurs contacteurs ou par le réglage préalable d'un ou plusieurs limiteurs de force.

17. Dispositif selon l'une quelconque des revendications 4 à 16,
**caractérisé en ce que**
les éléments de fixation (2) sont des éléments de tension faits d'un matériau élastique et adaptés à la section du volume creux (3).

18. Dispositif selon l'une quelconque des revendications 4 à 17,
**caractérisé en ce que**
les éléments de fixation (2), quand ils n'ont pas la forme d'éléments de tension, sont, avant la fixation, garnis complémentairement d'un agent de collage rapide.

19. Dispositif selon l'une quelconque des revendications 4 à 18,
**caractérisé en ce que**
les éléments de fixation (2) sont faits d'un matériau lisse ou d'un matériau à bords repliés et/ou chanfreinés, ou sont constitués par des profilés de sections géométriques diverses.

20. Dispositif selon l'une quelconque des revendications 4 à 19,
**caractérisé en ce que**
les éléments de fixation (2) présentent ou non des bosses de formes géométriques diverses, ouvertes vers le haut ou vers le bas, ou sont équipés de volumes creux fermés ou fendus de formes géométriques diverses.

21. Dispositif selon l'une quelconque des revendications 4 à 20,
**caractérisé en ce que**
les éléments de fixation (2) sont des éléments fermés, ou ils sont ouverts avec superposition de leurs extrémités, ou ils sont des éléments ouverts ne couvrant pas toute la périphérie du volume creux (3).

22. Dispositif selon la revendication 21,
**caractérisé en ce que**
les éléments de fixation ouverts (2) sont équipés d'un dispositif de verrouillage.

23. Dispositif selon l'une quelconque des revendications 21 ou 22,
**caractérisé en ce que**
les éléments de fixation ouverts (2) ont la forme d'anneaux à expansion.

24. Dispositif selon l'une quelconque des revendications 4 à 23,
**caractérisé en ce que**
les éléments de fixation (2) peuvent être empilés grâce à la forme conique de leurs bossages.

25. Dispositif selon l'une quelconque des revendications 4 à 24,
**caractérisé en ce que**
les éléments de fixation (2) sont introduits dans des fentes des liaisons du volume creux et sont scellés au moyen d'une masse coulée flexible, durcissant et/ou foisonnant rapidement.
